# EUROPEAN PATENT APPLICATION

(11) **EP 4 432 396 A1**
(43) Date of publication of application: **18.09.2024**
(21) Application number: 23753221.3
(22) Date of filing: 10.02.2023
(51) Int. Cl.: H01M 4/48, H01M 4/505, H01M 4/525, H01M 4/38, H01M 10/052, C01G 45/00, H01M 4/02

(54) **POSITIVE ELECTRODE ACTIVE MATERIAL POWDER, AND POSITIVE ELECTRODE AND LITHIUM SECONDARY BATTERY COMPRISING SAME**

(30) Priority: 11.02.2022 KR 20220018479
(71) Applicant: LG Energy Solution, Ltd., Seoul 07335 (KR)
(72) Inventor: HUR, Hyuck, Daejeon 34122 (KR); PARK, Sin Young, Daejeon 34122 (KR); HAN, Gi Beom, Daejeon 34122 (KR); KIM, Dong Hwi, Daejeon 34122 (KR); KWAK, Min, Daejeon 34122 (KR); CHAE, Seul Ki, Daejeon 34122 (KR); PARK, Kang Joon, Daejeon 34122 (KR); JUNG, Wang Mo, Daejeon 34122 (KR)
(74) Representative: Hoffmann Eitle
(86) International application number: PCT/KR2023/002021
(87) International publication number: WO 2023/153875

(57) **Abstract**

The present invention relates to positive electrode active material powder including overlithiated manganese-based oxide particles, which are represented by [Formula 1] and are in the form of a single particle composed of one nodule or a pseudo-single particle that is a composite of 2 to 30 nodules, and having an average particle diameter D₅₀ of 2.5 µm or less, and a positive electrode and a lithium secondary battery which include the positive electrode active material powder.

[Formula 1] LiₐNi_{b}Co_{c}Mn_{d}MₑO₂

In Formula 1, 1<a, 0≤b≤0.5, 0≤c≤0.1, 0.5≤d<1.0, and 0≤e≤0.2, and M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr).

## Description

### TECHNICAL FIELD

This application claims priority from Korean Patent Application No. 10-2022-0018479, filed on February 11, 2022, the disclosure of which is incorporated by reference herein.

The present invention relates to positive electrode active material powder, and a positive electrode and a lithium secondary battery which include the same, and more particularly, to positive electrode active material powder including an overlithiated manganese-based oxide in the form of a single particle or a pseudo-single particle, and a positive electrode and a lithium secondary battery which include the same.

### BACKGROUND ART

Recently, interests in energy storage technologies have been increasingly grown, and efforts for research and development of electrochemical devices have been gradually materialized as the application of the energy storage technologies is expanded to the energy of mobile phones, camcorders, notebook PCs, and even to electric vehicles.

There emerges an interest in rechargeable secondary batteries among these electrochemical devices, and, particularly, lithium secondary batteries developed in the early 1990's are spotlighted among the rechargeable secondary batteries because the lithium secondary batteries are advantageous in that they have higher operating voltage and significantly higher energy density.

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed. The non-aqueous electrolyte is generally composed of a lithium salt and an organic solvent capable of dissolving the lithium salt.

Lithium secondary batteries, which have been developed to date, mainly use a lithium nickel-based oxide, as a positive electrode active material, and use a carbon-based material, such as natural graphite or artificial graphite, as a negative electrode active material. However, these conventional lithium secondary batteries do not sufficiently satisfy energy density that is required for a battery for an electric vehicle. Thus, in order to achieve high capacity, a method of using an overlithiated manganese-based oxide containing excessive lithium as a positive electrode active material or using a silicon-based negative electrode active material having high theoretical capacity as a negative electrode active material is being actively reviewed.

With respect to the overlithiated manganese-based oxide containing excessive lithium, it has a crystal structure in which a layered phase (LiMO₂) and a rock salt phase (Li₂MnO₃) are mixed, wherein, since capacity by oxygen redox is additionally expressed as the rock salt phase is activated during charge and discharge, high capacity may be achieved. However, since a large amount of gas is generated during the oxygen-redox and the crystal structure of the positive electrode active material is changed, there is a problem in that life characteristics are degraded.

### DISCLOSURE OF THE INVENTION

### TECHNICAL PROBLEM

An aspect of the present invention provides positive electrode active material powder, which generates less gas, may achieve excellent battery safety and life characteristics, and has excellent resistance characteristics, and a positive electrode and a lithium secondary battery which use the same.

### TECHNICAL SOLUTION

According to an embodiment, the present invention provides positive electrode active material powder including overlithiated manganese-based oxide particles represented by [Formula 1], wherein the overlithiated manganese-based oxide particle is in a form of a single particle composed of one nodule or a pseudo-single particle that is a composite of 2 to 30 nodules, and the positive electrode active material powder has an average particle diameter D₅₀ of 2.5 µm or less, preferably 0.5 µm to 2.5 µm, and more preferably 0.6 µm to 2.5 µm.

[Formula 1] LiₐNi_{b}Co_{c}Mn_{d}MₑO₂

In Formula 1, M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr), and 1<a, 0≤b≤0.5, 0≤c≤0.1, 0.5≤d<1.0, and 0≤e≤0.2, preferably 1.1≤a≤1.5, 0.1≤b≤0.4, 0≤c≤0.05, 0.50≤d≤0.80, and 0≤e≤0.1, and more preferably 1.1≤a≤1.3, 0.2≤b≤0.4, 0≤c≤0.05, 0.50≤d≤0.70, and 0≤e≤0.1.

Preferably, the positive electrode active material powder may be composed of the positive electrode active material particles having at least one form of the single particle and the pseudo-single particle, and may more preferably be composed of the positive electrode active material particles in the form of a single particle.

The overlithiated manganese-based oxide may have a crystalline size of 30 nm to 200 nm, preferably 40 nm to 150 nm, and more preferably 70 nm to 150 nm.

According to another embodiment, the present invention provides a positive electrode including the positive electrode active material powder according to the present invention.

According to another embodiment, the present invention provides a lithium secondary battery which includes the positive electrode including the positive electrode active material powder according to the present invention; a negative electrode including a negative electrode active material; a separator disposed between the positive electrode and the negative electrode; and an electrolyte.

### ADVANTAGEOUS EFFECTS

Since an overlithiated manganese-based oxide in the form of a single particle or a pseudo-single particle has a smaller reaction area with an electrolyte solution and higher particle strength than a conventional overlithiated manganese-based oxide having a secondary particle form, it has less particle breakage by rolling during preparation of an electrode. Thus, in a case in which the overlithiated manganese-based oxide in the form of a single particle or a pseudo-single particle is used as a positive electrode active material as in the present invention, an amount of gas generated is significantly reduced, and, accordingly, an effect of improving life characteristics and safety of a lithium secondary battery may be obtained.

Also, in the present invention, good output characteristics and resistance characteristics may be achieved by using the positive electrode active material powder having a small average particle diameter D₅₀ of 2.5 µm or less although the positive electrode active material powder is in the form of a single particle or a pseudo-single particle.

Furthermore, the overlithiated manganese-based oxide included in positive electrode active material powder of the present invention has a crystal structure in which a rock salt-structured Li₂MnO₃ phase and a layer-structured LiM'O₂ phase (where M' is nickel (Ni), cobalt (Co), manganese (Mn)) are mixed, wherein, since an excessive amount of lithium is generated from the Li₂MnO₃ phase in an activation process, it may be used to compensate for irreversible capacity of a negative electrode active material. Thus, in a case in which the positive electrode active material of the present invention is used, since pre-lithiation or use of a sacrificial positive electrode material for compensating a negative electrode may be minimized, positive electrode capacity may be maximized.

### BRIEF DESCRIPTION OF THE DRAWINGS

FIG. 1 is a scanning electron microscope (SEM) image of positive electrode active material powder prepared by Example 1.
FIG. 2 is an SEM image of positive electrode active material powder prepared by Comparative Example 1.
FIG. 3 is an SEM image of positive electrode active material powder prepared by Comparative Example 2.
FIG. 4 is a graph showing resistance characteristics of lithium secondary batteries in which positive electrode active materials of Examples 1 to 3 and Comparative Example 1 are used.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "single particle" means a particle composed of one nodule. In the present invention, the expression "pseudo-single particle" means a particle that is a composite formed of 30 or less nodules.

In the present invention, the expression "nodule" means a sub-particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) with a field of view of 5,000 times to 20,000 times.

In the present invention, the expression "secondary particle" means a particle formed by aggregation of a plurality, for example, tens to hundreds of primary particles. Specifically, the secondary particle is an aggregate of 40 or more primary particles.

The expression "particle" used in the present invention may include any one or all of the single particle, the pseudo-single particle, the primary particle, the nodule, and the secondary particle.

The expression "average particle diameter D₅₀" in the present invention means a particle size on the basis of 50% in a volume cumulative particle size distribution of positive electrode active material powder. The average particle diameter D₅₀ may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

An average particle diameter of the primary particles or nodules in the present invention may be measured through image analysis. Specifically, after an image of particles is obtained using a device such as a scanning electron microscope (SEM) or electron backscatter diffraction (EBSD) and particle diameters of the primary particles or nodules identified in the obtained image are measured, the average particle diameter may be measured by obtaining an arithmetic average value thereof.

In the present invention, a "crystalline size" may be quantitatively analyzed using X-ray diffraction (XRD) analysis by copper (Cu) Kα X-rays. Specifically, the crystalline size may be quantitatively analyzed by putting particles to be measured in a holder and analyzing a diffraction grating produced by irradiating the particles with X-rays. Sampling was prepared by putting a powder sample of the measurement target particles in a groove in the middle of a holder for general powder, leveling a surface using a slide glass, and making a sample height the same as an edge of the holder. Then, X-ray diffraction analysis was performed using a fixed divergence slit (FDS) of 0.5° and a 2θ range of 15° to 90° under conditions, in which a step size was 0.02° and total scan time was about 20 minutes, using a Bruker D8 Endeavor (light source: Cu Kα, λ=1.54 Å) equipped with a LynxEye XE-T position sensitive detector. Rietveld refinement was performed for the measured data in consideration of charge at each site (metal ions at transition metal sites were +3, Ni ion at a Li site was +2) and cation mixing. Instrumental broadening during the crystalline size analysis was considered by using Fundamental Parameter Approach (FPA) implemented in a Bruker TOPAS program, and entire peaks in the measurement range were used during fitting. A peak shape was fitted using only Lorentzian contribution as a first principle (FP) among peak types available in the TOPAS, and, in this case, strain was not considered.

As a result of a significant amount of research conducted into solving the problem of gas generation and degradation in life characteristics of a secondary battery in which an overlithiated manganese-based oxide is used, the present inventors have found that an amount of gas generated may be reduced, the life characteristics may be significantly improved, and excellent resistance/output characteristics may be achieved by forming the overlithiated manganese-based oxide in the form of a single particle composed of one nodule or a pseudo-single particle that is a composite of 30 or less nodules and adjusting an average particle diameter D₅₀ to 2.5 µm or less, thereby leading to the completion of the present invention.

Hereinafter, the present invention will be described in more detail.

Positive electrode active material powder according to the present invention includes overlithiated manganese-based oxide particles represented by the following [Formula 1], wherein the overlithiated manganese-based oxide particle is in a form of a single particle composed of one nodule or a pseudo-single particle that is a composite of 2 to 30 nodules, and the positive electrode active material powder has an average particle diameter D₅₀ of 2.5 µm or less, preferably 0.5 µm to 2.5 µm, and more preferably 0.6 µm to 2.5 µm.

[Formula 1] LiₐNi_{b}Co_{c}Mn_{d}MₑO₂

In Formula 1, M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr), and 1<a, 0≤b≤0.5, 0≤c≤0.1, 0.5≤d<1.0, and 0≤e≤0.2, preferably 1.1≤a≤1.5, 0.1≤b≤0.4, 0≤c≤0.05, 0.50≤d≤0.80, and 0≤e≤0.1, and more preferably 1.1≤a≤1.3, 0.2≤b≤0.4, 0≤c≤0.05, 0.50≤d≤0.70, and 0≤e≤0.1.

### Positive Electrode Active Material Powder

The positive electrode active material powder according to the present invention includes overlithiated manganese-based oxide particles in the form of a single particle composed of one nodule or a pseudo-single particle that is a composite of 2 to 30 nodules. Preferably, the positive electrode active material powder may be composed of the overlithiated manganese-based oxide particles having at least one form of the single particle and the pseudo-single particle.

A conventional overlithiated manganese-based oxide particle was generally in a form of a spherical secondary particle in which tens to hundreds of primary particles were aggregated. However, with respect to the secondary particle in which many primary particles are aggregated as described above, there is a problem in that particle breakage, in which the primary particles fall off in a rolling process during preparation of a positive electrode, is likely to occur and cracks occur in the particles during charge and discharge. Also, since a contact area with an electrolyte solution is increased, active material degradation and gas generation due to a side reaction with the electrolyte solution are increased, and, as a result, there is a problem in that life characteristics are degraded.

However, as in the present invention, in a case in which the overlithiated manganese-based oxide particle is formed in the form of a single particle or a pseudo-single particle, the particle breakage during rolling is reduced due to its higher particle strength than the conventional overlithiated manganese-based oxide particle in the form of a secondary particle, and, since the number of sub-particle unit bodies (i.e., nodules) constituting the particle is small, changes due to volume expansion and contraction of the sub-particle unit bodies during charge and discharge are small, and accordingly, occurrence of cracks in the particles is significantly reduced. Also, since the single particle or pseudo-single particle has a smaller reaction area with the electrolyte solution than the secondary particle, the gas generation due to the side reaction with the electrolyte solution is also reduced.

The overlithiated manganese-based oxide particle according to the present invention may have a composition represented by [Formula 1] below.

[Formula 1] LiₐNi_{b}Co_{c}Mn_{d}MₑO₂

In Formula 1, M may be at least one selected from the group consisting of Al, B, Co, W, Mg, V, Ti, Zn, Ga, In, Ru, Nb, Sn, Sr, and Zr.
a is a molar ratio of lithium (Li) in the overlithiated manganese-based oxide, wherein a may satisfy 1<a, 1.1≤a≤1.5, or 1.1≤a≤1.3. When a satisfies the above range, a crystal structure, in which a layered phase and a rock salt phase are mixed, may be formed, and high capacity characteristics may be achieved because capacity by oxygen redox may be achieved during charge and discharge.
b is a molar ratio of nickel (Ni) in the overlithiated manganese-based oxide, wherein b may satisfy 0≤b≤0.5, 0.1≤b≤0.4, or 0.2≤b≤0.4.
c is a molar ratio of cobalt (Co) in the overlithiated manganese-based oxide, wherein c may satisfy 0≤c≤0.1, 0≤c≤0.08, or 0≤c≤0.05. In a case in which c is greater than 0.1, since it is difficult to secure high capacity and the gas generation and degradation of the positive electrode active material may be intensified, the life characteristics may be degraded.
d is a molar ratio of manganese (Mn) in the overlithiated manganese-based oxide, wherein d may satisfy 0.5≤d<1.0, 0.50≤d≤0.80, or 0.50≤d≤0.70. In a case in which d is less than 0.5, since a ratio of the rock salt phase is excessively small, an effect of improving capacity is insignificant.
e is a molar ratio of doping element M in the overlithiated manganese-based oxide, wherein e may satisfy 0≤e≤0.2, 0≤e≤0.1, or 0≤e≤0.05. An excessively large amount of the doping element may adversely affect capacity of the active material.

The overlithiated manganese-based oxide has a crystal structure in which a layered phase (LiMO₂) and a rock salt phase (Li₂MnO₃) are mixed, and, since additional capacity may be achieved by oxygen redox during charge and discharge while the rock salt phase is activated at a high voltage of 4.4 V or higher, high capacity may be achieved.

In the overlithiated manganese-based oxide represented by [Formula 1], a ratio (Li/Me) of the number of moles of Li to the number of moles of total metallic elements excluding Li may be in a range of 1.2 to 1.5, 1.25 to 1.5, or 1.25 to 1.4. When the Li/Me ratio satisfies the above range, rate capability and capacity characteristics are excellent. If the Li/Me ratio is excessively high, electrical conductivity may be decreased and the rock salt phase (Li₂MnO₃) may be increased to accelerate degradation rate, and, if the Li/Me ratio is excessively low, an energy density improvement effect is insignificant.

The composition of the overlithiated manganese-based oxide may also be represented by [Formula 2] below.

[Formula 2] X Li₂MnO₃·(1-X)Li[Ni_{1-y-z-w}Mn_{y}Co_{z}M_{w}]O₂

In [Formula 2], M may be at least one selected from the group consisting of Al, B, Co, W, Mg, V, Ti, Zn, Ga, In, Ru, Nb, Sn, Sr, and Zr.

X represents a ratio of the Li₂MnO₃ phase in the overlithiated manganese-based oxide, wherein X may satisfy 0.2≤X≤0.5, 0.25≤X≤0.5, or 0.25≤X≤0.4. When the ratio of the Li₂MnO₃ phase in the overlithiated manganese-based oxide satisfies the above range, high capacity characteristics may be achieved.

y is a molar ratio of Mn in a LiM'O₂ (where, M' = Ni_{1-y-z-w}Mn_{y}Co_{z}M_{w}) layered phase, wherein y may satisfy 0.4≤y<1, 0.4≤y≤0.8, or 0.4≤y≤0.7.

z is a molar ratio of Co in the LiM'O₂ layered phase, wherein z may satisfy 0≤z≤0.1, 0≤z≤0.08, or 0≤z≤0.05. In a case in which z is greater than 0.1, since the gas generation and the degradation of the positive electrode active material may be intensified, the life characteristics may be degraded.

w is a molar ratio of doping element M in the LiM'O₂ layered phase, wherein w may satisfy 0≤w≤0.2, 0≤w≤0.1, or 0≤w≤0.05.

In the overlithiated manganese-based oxide, an average particle diameter of the nodule may be 0.5 µm or more, 1.0 µm or more, or 1.5 µm or more, and may be 3.5 µm or less, 3 µm or less, 2.5 µm or less, or 2.0 µm or less. The average particle diameter of the nodule may be in a range of 0.5 µm to 3.5 µm. For example, the average particle diameter of the nodule may be in a range of 0.5 µm to 3.5 µm, 0.5 µm to 3 µm, 1 µm to 3 µm, or 1 µm to 2.5 µm. In a case in which the average particle diameter of the nodule is less than 0.5 µm, a total specific surface area of the positive electrode active material may be increased to increase the electrolyte solution side reaction, and, in a case in which the average particle diameter of the nodules is greater than 3.5 µm, lithium mobility in the positive electrode active material may be decreased to degrade output characteristics of the battery.

Also, a crystalline size of the overlithiated manganese-based oxide may be in a range of 30 nm to 200 nm, preferably 40 nm to 150 nm, and more preferably 70 nm to 150 nm. When the crystalline size satisfies the above range, completeness of the crystal structure may be improved, and excellent electrochemical performance may be secured. If the crystalline size is excessively small, since the crystal structure is not formed properly, stability of the crystal structure is reduced, and as a result, life performance is degraded and the gas generation may be increased. If the crystalline size is excessively large, the structural stability is increased, but an impurity structure may be generated on a surface to increase resistance, and a movement path of Li may be increased to reduce the rate capability.

The overlithiated manganese-based oxide may be prepared by mixing a transition metal precursor and a lithium raw material and then sintering the mixture.

The lithium raw material, for example, may include lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNOs), etc.), or chlorides (e.g., lithium chloride (LiCl), etc.), and any one thereof or a mixture of two or more may be used.

The transition metal precursor may be in a form of a hydroxide, oxide, or carbonate. In a case in which the precursor in the form of a carbonate is used, it is more preferable in that a positive electrode active material having a relatively high specific surface area may be prepared.

The transition metal precursor may be prepared through a co-precipitation process. For example, after a metal solution is prepared by dissolving each transition metal-containing raw material in a solvent, the transition metal precursor may be prepared by a method of mixing the metal solution, an ammonium cationic complexing agent, and a basic compound and then performing a co-precipitation reaction. Also, an oxidizing agent or oxygen gas may be further added during the co-precipitation reaction, if necessary.

In this case, the transition metal-containing raw material may be acetic acid salts, carbonates, nitrates, sulfates, halides, or sulfides of each transition metal. Specifically, the transition metal-containing raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCOs, Mn(NO₃)₂, MnSO₄·H₂O, manganese acetate, manganese halide, cobalt oxide, cobalt nitrate, cobalt sulfate, cobalt carbonate, cobalt acetate, or cobalt halide.

The ammonium cationic complexing agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, Na₂CO₃, KOH, and Ca(OH)₂. The form of the precursor may vary depending on a type of the basic compound used. For example, in a case in which NaOH is used as the basic compound, a precursor in the form of a hydroxide may be obtained, and, in a case in which Na₂CO₃ is used as the basic compound, a precursor in the form of a carbonate may be obtained. Also, in a case in which the basic compound and the oxidizing agent are used together, a precursor in the form of an oxide may be obtained.

The transition metal precursor and the lithium raw material may be mixed in amounts such that a molar ratio of total transition metals (Ni+Co+Mn):Li is in a range of 1:1.05 to 1:2, preferably 1:1.1 to 1:1.8, and more preferably 1:1.3 to 1:1.8.

The sintering is performed at a temperature at which a single particle or pseudo-single particle may be formed. In order to form the single particle or pseudo-single particle, the sintering must be performed at a temperature higher than that during preparation of conventional lithium composite transition metal oxide in the form of a secondary particle, and, for example, in a case in which a precursor composition is the same, the sintering must be performed at a temperature about 30°C to 100°C higher than that during the preparation of the conventional lithium composite transition metal oxide in the form of a secondary particle. The sintering temperature for forming the single particle or pseudo-single particle may vary depending on a metal composition in the precursor, but, for example, the sintering may be performed at a temperature of 800°C to 1,100°C, preferably, about 950°C to about 1,050°C.

Also, the sintering may be performed for 5 hours to 35 hours in an oxygen atmosphere. Herein, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

The positive electrode active material according to the present invention may further include a coating layer on a surface of the overlithiated manganese-based oxide particle, if necessary.

In a case in which the positive electrode active material includes the coating layer, since a contact between the overlithiated manganese-based oxide and an electrolyte is suppressed by the coating layer, the electrolyte solution side reaction is reduced, and, as a result, an effect of reducing gas and improving life characteristics is more excellent.

The coating layer may include a coating element M¹, wherein the coating element M¹, for example, may be at least one selected from the group consisting of Al, B, Co, W, Mg, V, Ti, Zn, Ga, In, Ru, Nb, Sn, Sr, and Zr, may be preferably Al, Co, Nb, W, and a combination thereof, and may be more preferably Al, Co, and a combination thereof. Two or more kinds of the coating element M¹ may be included, and, for example, Al and Co may be included. The coating element may be present in an oxide form, that is, M¹Oz (1 ≤z≤4) in the coating layer.

The coating layer may be formed through a method such as dry coating, wet coating, chemical vapor deposition (CVD), physical vapor deposition (PVD), and atomic layer deposition (ALD). Among them, it is desirable that the coating layer is formed through the atomic layer deposition method in terms of forming an area of the coating layer widely.

The area of the coating layer formed may be in a range of 10% to 100%, preferably 30% to 100%, and more preferably 50% to 100% based on a total surface area of the overlithiated manganese-based oxide particle.

The positive electrode active material powder according to the present invention may have an average particle diameter D₅₀ of 2.5 µm or less, preferably 0.5 µm to 2.5 µm, and more preferably 0.6 µm to 2.5 µm. As described above, the positive electrode active material in the form of a single particle or a pseudo-single particle is advantageous in that it has excellent particle strength and a small contact area with the electrolyte solution to suppress gas generation and, as a result, excellent life characteristics may be achieved, but, since there are few interfaces between the primary particles which are movement paths of lithium ions in the positive electrode active material particles, lithium mobility is lower than that of a positive electrode active material in the form of a secondary particle and there is a problem in that resistance is increased by forming a rock salt phase without electrical activity on a surface of the particle during over-sintering at high temperature to form the single particle. This increase in resistance becomes more severe as the particle size increases, and, if the resistance is increased, capacity and output characteristics are degraded. Thus, in the present invention, since a movement distance of the lithium ions in the positive electrode active material particle is minimized by using the positive electrode active material powder having a small average particle diameter D₅₀ of 2.5 µm or less, the decrease in lithium mobility and the increase in resistance may be maximally suppressed.

Also, the positive electrode active material powder may have a Brunauer-Emmett-Teller (BET) specific surface area of 0.5 m²/g to 5 m²/g or 1 m²/g to 3 m²/g. When the BET specific surface area of the positive electrode active material powder satisfies the above range, appropriate electrochemical properties may be secured. If the specific surface area is excessively small, the electrochemical properties may be deteriorated as reaction sites are reduced, and, if the specific surface area is excessively large, the reaction area with the electrolyte solution may be increased to further activate the side reaction at high voltage.

Furthermore, it is desirable that the positive electrode active material powder according to the present invention has an initial irreversible capacity of 5% to 70%, 5% to 50%, or about 5% to about 30%. When the initial irreversible capacity of the positive electrode active material satisfies the above range, irreversible capacity of a silicon-based negative electrode active material may be sufficiently compensated without a separate compensation material, such as a sacrificial positive electrode material, or a pre-lithium compensation process such as pre-lithiation.

### Positive Electrode

Next, a positive electrode according to the present invention will be described.

The positive electrode according to the present invention includes positive electrode active material powder including the overlithiated manganese-based oxide in the form of a single particle or a pseudo-single particle according to the present invention. Specifically, the positive electrode includes a positive electrode collector and a positive electrode active material layer which is formed on the positive electrode collector and includes the positive electrode active material powder. Since the positive electrode active material powder has been described above, the remaining components will be described below.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode active material powder.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves the adhesion between the positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode. For example, after a positive electrode slurry is prepared by mixing the positive electrode active material, the binder, and/or the conductive agent in a solvent and is coated on the positive electrode collector, the positive electrode may be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Lithium Secondary Battery

A lithium secondary battery of the present invention includes a positive electrode including the positive electrode active material powder according to the present invention; a negative electrode including a negative electrode active material; a separator disposed between the positive electrode and the negative electrode, and an electrolyte.

In a case in which the positive electrode active material powder according to the present invention is used, after performing an activation process at a high voltage of 4.6 V or more, high energy density may be achieved by repeating charge and discharge at a charge end voltage of 4.2 V to 4.5 V, and the degradation in life characteristics due to the gas generation may be minimized.

Also, with respect to the overlithiated manganese-based oxide represented by Formula 1, since the initial irreversible capacity is high, even in a case in which the overlithiated manganese-based oxide is used with a negative electrode active material having large irreversible capacity such as a silicon-based negative electrode active material, pre-lithiation or addition of a sacrificial positive electrode material for compensating the irreversible capacity of the negative electrode active material may be minimized.

Since the positive electrode has been described above, the remaining components will be described below.

### Negative Electrode

The negative electrode according to the present invention includes a negative electrode active material layer including a negative electrode active material, and the negative electrode active material layer may further include a conductive agent and/or a binder, if necessary.

Various negative electrode active materials used in the art, for example, a silicon-based negative electrode active material, a carbon-based negative electrode active material, or a metal alloy, may be used as the negative electrode active material.

Preferably, the negative electrode active material includes a silicon-based negative electrode active material.

Since the silicon-based negative electrode active material has higher theoretical capacity than the carbon-based negative electrode active material and has a fast reaction rate with lithium, energy density and rapid charging performance may be improved when the silicon-based negative electrode active material is included in the negative electrode. However, since the silicon-based negative electrode active material has large irreversible capacity and has a large volume expansion during charge and discharge, it is inferior in terms of life characteristics. Particularly, in a case in which it is used in combination with the overlithiated manganese-based oxide from which a large amount of gas is generated, there is a problem in that the degradation of the life characteristics is more intensified. However, in a case in which the overlithiated manganese-based oxide in the form of a single particle or a pseudo-single particle is used as in the present invention, since the gas generation is less than that of a conventional overlithiated manganese-based oxide in the form of a secondary particle, the degradation of the life characteristics may be minimized and an excessive amount of lithium generated from the rock salt phase during the activation process of the overlithiated manganese-based oxide may compensate for the irreversible capacity of the silicon-based negative electrode active material.

The silicon-based negative electrode active material, for example, may be silicon (Si), SiO_{w} (where, 0<w≤2), a Si-C composite, a Si-M^{a} alloy (M^{a} is at least one selected from the group consisting of Al, Sn, Mg, copper (Cu), iron (Fe), lead (Pb), Zn, Mn, chromium (Cr), Ti, and Ni), or a combination thereof.

The silicon-based negative electrode active material may be doped with M^{b} metal, if necessary, and, in this case, the M^{b} metal may be a Group 1 alkali metal element and/or a Group 2 alkaline earth metal element, and, for example, may be Li or Mg. Specifically, the silicon-based negative electrode active material may be Si, SiO_{w} (where, 0<w≤2), or a Si-C composite which is doped with the M^{b} metal. With respect to the metal-doped silicon-based negative electrode active material, since capacity of the active material is reduced due to the doping element, but it has high efficiency, high energy density may be achieved.

Also, the silicon-based negative electrode active material may further include a carbon coating layer on a surface of the particle, if necessary. In this case, an amount of carbon coating may be 20 wt% or less, preferably, 0.1 wt% to 20 wt% based on a total weight of the silicon-based negative electrode active material. Since electrical conductivity of a silicon surface is improved when the carbon coating is applied, uniformity of a solid electrolyte interphase (SEI) layer is improved and there is an effect of improving initial efficiency and life characteristics.

The carbon coating layer may be formed through a method such as dry coating, wet coating, chemical vapor deposition (CVD), physical vapor deposition (PVD), and atomic layer deposition (ALD).

It is desirable that the silicon-based negative electrode active material has a capacity of 1,000 mAh/g to 4,000 mAh/g, preferably 1,000 mAh/g to 3,800 mAh/g, and more preferably 1,200 mAh/g to 3,800 mAh/g. If the silicon-based negative electrode active material satisfying the above capacity range is used, high capacity characteristics may be achieved.

Also, the silicon-based negative electrode active material may have an initial efficiency of 60% to 95%, 70% to 95%, and preferably 75% to 95%. After a half-cell is prepared with a negative electrode using 100% of the silicon-based negative electrode active material, as a negative electrode active material, and a lithium counter electrode, the initial efficiency of the silicon-based negative electrode active material means a percentage of discharge capacity relative to charge capacity which are measured by charging and discharging the half-cell at a 0.1C-rate between 0.01 V and 1.5 V. When the initial efficiency of the silicon-based negative electrode active material satisfies the above range, lithium provided from the positive electrode may be reversibly used, and excellent rapid charging performance may be achieved.

Furthermore, with respect to a particle size of the silicon-based negative electrode active material, D₅₀ may be in a range of 3 µm to 8 µm, preferably, 4 µm to 7 µm, and Dₘᵢₙ to Dₘₐₓ may be in a range of 0.01 µm to 30 µm, preferably 0.01 µm to 20 µm, and more preferably 0.5 µm to 15 µm. When the particle size of the silicon-based negative electrode active material satisfies the above range, sufficient electrode density may be secured by the silicon-based negative electrode active material alone or a mixture of the silicon-based negative electrode active material with a carbon-based negative electrode active material.

Also, the negative electrode may further include a carbon-based negative electrode active material as the negative electrode active material, if necessary. The carbon-based negative electrode active material, for example, may be artificial graphite, natural graphite, graphitized carbon fibers, amorphous carbon, soft carbon, or hard carbon, but is not limited thereto.

The silicon-based negative electrode active material may be included in an amount of 1 wt% to 100 wt%, 1 wt% to 50 wt%, 1 wt% to 30 wt%, 1 wt% to 15 wt%, 10 wt% to 70 wt%, or 10 wt% to 50 wt% based on a total weight of the negative electrode active material.

The carbon-based negative electrode active material may be included in an amount of 0 wt% to 99 wt%, 50 wt% to 99 wt%, 70 wt% to 99 wt%, 85 wt% to 99 wt%, 30 wt% to 90 wt%, or 50 wt% to 90 wt% based on the total weight of the negative electrode active material.

According to an embodiment, the negative electrode active material may be a mixture of the silicon-based negative electrode active material and the carbon-based negative electrode active material, wherein a mixing ratio of the silicon-based negative electrode active material:the carbon-based negative electrode active material may be in a range of 1:99 to 50:50, preferably, 3:97 to 30:70, as a weight ratio. In a case in which the mixing ratio of the silicon-based negative electrode active material to the carbon-based negative electrode active material satisfies the above range, excellent cycle performance may be secured by suppressing the volume expansion of the silicon-based negative electrode active material while improving the capacity characteristics.

The negative electrode active material may be included in an amount of 80 wt% to 99 wt% based on a total weight of the negative electrode active material layer.

The conductive agent, for example, may include spherical or flaky graphite; a carbon-based material such as carbon black, acetylene black, Ketjen black, channel black, furnace black, lamp black, thermal black, carbon fibers, single-walled carbon nanotubes, and multi-walled carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 30 wt%, 1 wt% to 20 wt%, or 1 wt% to 10 wt% based on the total weight of the negative electrode active material layer.

Preferably, single-walled carbon nanotubes may be used as the conductive agent. In a case in which the single-walled carbon nanotubes are used as the conductive agent, a conductive path is evenly formed on the surface of the negative electrode active material, and, as a result, an effect of improving cycle characteristics may be obtained.

The binder, for example, may include polyvinylidene fluoride (PVDF), polyvinylidene fluoride-hexafluoropropylene copolymer (PVDF-co-HFP), polyvinyl alcohol, polyacrylic acid, polyacrylamide, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 20 wt%, 2 wt% to 20 wt%, or 2 wt% to 10 wt% based on the total weight of the negative electrode active material layer.

In the negative electrode, the negative electrode active material layer may be a single layer or may have a multilayer structure composed of two or more layers. In a case in which the negative electrode active material layer has the multilayer structure composed of two or more layers, each layer may have different types and/or amounts of the negative electrode active material, the binder, and/or the conductive agent. For example, in the negative electrode according to the present invention, a lower layer may be formed such that the amount of the carbon-based negative electrode active material is higher than that of an upper layer, the upper layer may be formed such that the amount of the silicon-based negative electrode active material is high, and, in this case, an effect of improving the rapid charging performance may be obtained in comparison to a case where the negative electrode active material layer is formed as a single layer.

The negative electrode active material layer may have a porosity of 20% to 70% or 20% to 50%. If the porosity of the negative electrode active material layer is excessively small, electrolyte solution impregnability may be reduced to reduce lithium mobility, and, if the porosity is excessively large, the energy density may be reduced.

In the lithium secondary battery of the present invention, it is desirable to configure an N/P ratio, which is a ratio of negative electrode discharge capacity to positive electrode discharge capacity, differently according to a type of the negative electrode active material used.

For example, in a case in which a mixture of SiO and the carbon-based negative electrode active material is used as the negative electrode active material, the N/P ratio may be in a range of 100% to 150%, preferably 100% to 140%, and more preferably about 100% to about 120%. In a case in which the negative electrode discharge capacity to the positive electrode discharge capacity is outside the above range, since the positive electrode and the negative electrode are out of balance, the life characteristics may be degraded or lithium precipitation may occur.

Also, in a case in which 100% of Si is used as the negative electrode active material, the N/P ratio may be in a range of 150% to 300%, preferably 160% to 300%, and more preferably about 180% to about 300%. In a case in which the negative electrode discharge capacity to the positive electrode discharge capacity is outside the above range, since the positive electrode and the negative electrode are out of balance, the life characteristics may be degraded or the lithium precipitation may occur.

The negative electrode may be prepared according to a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried, or may be prepared by casting the negative electrode slurry on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

### Separator

The separator in the lithium secondary battery of the present invention separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### Electrolyte

The electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N-, and LiPF₆, LiN(FSO₂)₂, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, or LiB(C₂O₄)₂ may be used as the lithium salt. The lithium salt may be used in a concentration range of 0.1 M to 5.0 M.

Also, in order to improve the life characteristics of the battery, suppress the reduction in capacity, and inhibit the gas generation, an additive may be included in the electrolyte. As the additive, various additives used in the art, for example, fluoroethylene carbonate (FEC), vinylene carbonate (VC), vinylethylene carbonate (VEC), ethylene sulfate (ESa), lithium difluorophosphate (LiPO₂F₂), lithium bisoxalato borate (LiBOB), lithium tetrafluoro borate (LiBF₄), lithium difluorooxalato borate (LiDFOB), lithium difluorobisoxalatophosphate (LiDFBP), lithium tetrafluorooxalato phosphate (LiTFOP), lithium methyl sulfate (LiMS), lithium ethyl sulfate (LiES) propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyl di(pro-2-y-1-yl)phosphate (EDP), 5-methyl-5-propargyloxylcarbonyl-1,3-dioxane-2-one (MPOD), a compound represented by the following Formula A (e.g., cyanoethylpolyvinyl alcohol, PVA-CN), a compound represented by the following Formula B (e.g., heptafluorobutyrcyanoethylpolyvinyl alcohol, PF-PVA-CN), a compound represented by the following Formula C (e.g., propargyl 1H-imidazole-1-carboxylate, PAC), and/or a compound represented by the following Formula D (e.g., arylimidazole such as C₆H₃N₂) may be used.

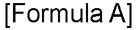

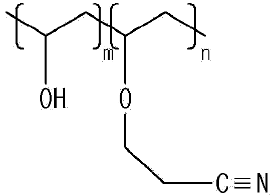

In Formula A, m and n are each independently an integer of 1 to 100.

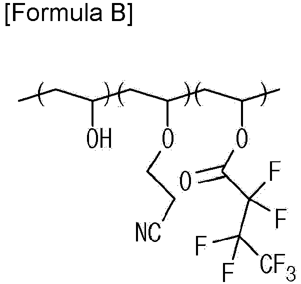

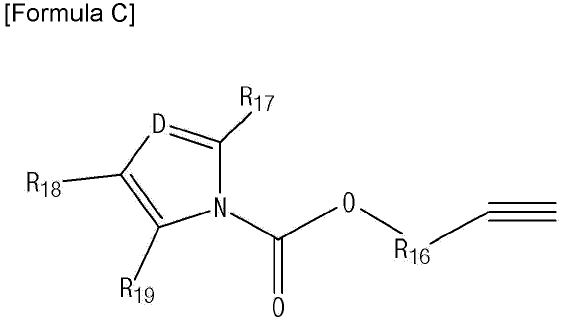

In Formula C, R₁₆ is a linear or non-linear alkylene group having 1 to 3 carbon atoms, R₁₇ to R₁₉ are each independently at least one selected from the group consisting of hydrogen, an alkyl group having 1 to 3 carbon atoms, and - CN, and D is CH, or N.

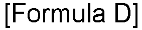

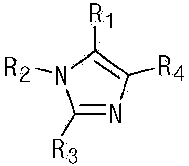

In Formula D,
R₁, R₂, R₃, and R₄ may each independently include hydrogen; or an alkyl group having 1 to 5 carbon atoms, a cyano group (CN), an allyl group, a propargyl group, an amine group, a phosphate group, an ether group, a benzene group, a cyclohexyl group, a silyl group, an isocyanate group (-NCO), or a fluorine group (-F).

Preferably, compounds acting as an oxygen scavenger may be used as the additive. Materials with a phosphite-based structure (see Formula E), such as tris tri(methylsilyl)phosphite (TMSPi), tris trimethylphosphite (TMPi), and tris(2,2,2-trifluoroethyl)phosphite (TTFP), tris tri(methylsilyl)phosphate (TMSPa), polyphosphoric acid trimethylsilyl ester (PPSE), tris(pentafluorophenyl)borane (TPFPB), and compounds including a coumarin structure (see Formula F), such as coumarin-3-carbonitrile (CMCN), 7-ethynylcoumarin (ECM), 3-acetylcoumarin (AcCM), 3-[(trimethylsilyl)oxyl]-2H-1-benzopyran-2-one (TMSOCM), 3-(trimethylsilyl)coumarin (TMSCM), 3-(2-propyn-1-yloxyl)-2H-1-benzopyran-2-one (POCM), and 2-propyn-1-yl-2-oxo-2H-1-benzopyran-3-carboxylate (OBCM), may be used as the compound acting as the oxygen scavenger.

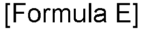

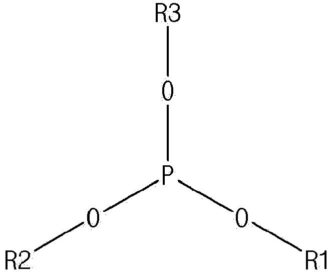

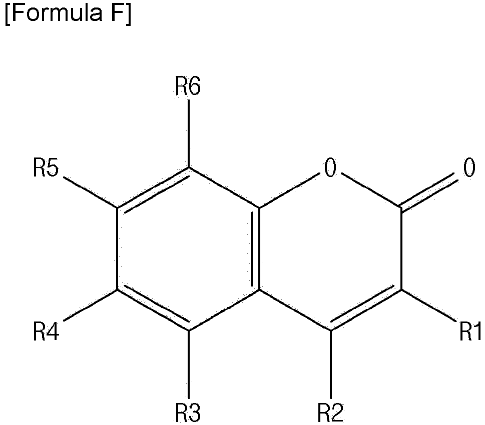

In Formulae E and F, R₁ to R₆ may each independently include cyanide (nitrile), fluoro (F), ether (C-O-C), carboxyl (O-C=O), trimethylsilyl (-TMS), isocyanate (-NCO), and/or isothiocyanate (-NCS) functional group which are an unsubstituted or substituted alkenyl group having 2 to 20 carbon atoms and an unsubstituted or substituted alkynyl group having 2 to 20 carbon atoms.

The lithium secondary battery according to the present invention as described above may be suitably used in portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### PREFERRED MODE FOR CARRYING OUT THE INVENTION

Hereinafter, the present invention will be described in detail through specific examples.

### Example 1

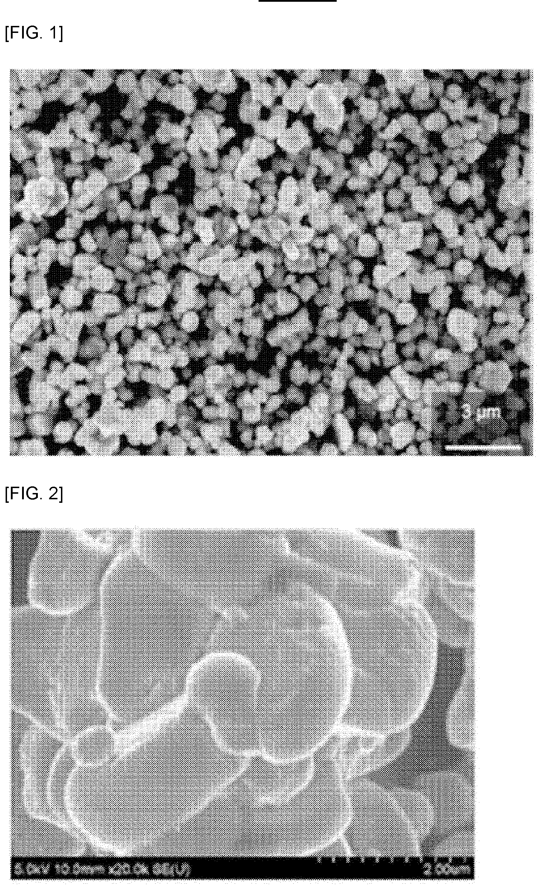

Ni_{0.25}Mn_{0.75}(OH)₂ having an average particle diameter D₅₀ of 0.8 µm and lithium hydroxide (LiOH) were put into a Henschel mixer (700 L) in amounts such that a molar ratio of Li:transition metals (Ni+Mn) was 1.4:1, and mixing was performed at 300 rpm for 20 minutes. The mixed powder was put into an alumina crucible having a size of 330 mm × 330 mm, maintained at 500°C for 10 hours in an oxygen atmosphere, and then sintered at 850°C for 30 hours to prepare positive electrode active material powder. A scanning electron microscope (SEM) image of the prepared positive electrode active material powder is illustrated in FIG. 1. According to FIG. 1, it may be confirmed that the prepared positive electrode active material powder had a form of a single particle.

### Example 2

Ni_{0.35}Mn_{0.65}(OH)₂ having an average particle diameter D₅₀ of 1.0 µm and lithium hydroxide (LiOH) were put into a Henschel mixer (700 L) in amounts such that a molar ratio of Li:transition metals (Ni+Mn) was 1.33:1, and mixing was performed at 300 rpm for 20 minutes. The mixed powder was put into an alumina crucible having a size of 330 mm × 330 mm, maintained at 500°C for 10 hours in an oxygen atmosphere, and then sintered at 850°C for 30 hours to prepare an overlithiated manganese-based oxide.

The overlithiated manganese-based oxide and an aluminum oxide were mixed and then heat-treated to prepare positive electrode active material powder in which a surface of the overlithiated manganese-based oxide was coated with 1,500 ppm of Al.

### Example 3

Ni_{0.25}Mn_{0.75}(OH)₂ having an average particle diameter D₅₀ of 1.8 µm and lithium hydroxide (LiOH) were put into a Henschel mixer (700 L) in amounts such that a molar ratio of Li:transition metals (Ni+Mn) was 1.4:1, and mixing was performed at 300 rpm for 20 minutes. The mixed powder was put into an alumina crucible having a size of 330 mm × 330 mm, maintained at 500°C for 10 hours in an oxygen atmosphere, and then sintered at 880°C for 30 hours to prepare positive electrode active material powder.

### Comparative Example 1

Ni_{0.25}Mn_{0.75}(OH)₂ powder having a D₅₀ of 3 µm and lithium hydroxide (LiOH) were put into a Henschel mixer (700 L) in amounts such that a molar ratio of Li:transition metals (Ni+Mn) was 1.4:1, and mixing was performed at 300 rpm for 20 minutes. The mixed powder was put into an alumina crucible having a size of 330 mm × 330 mm and then sintered at 900°C for 10 hours in an oxygen atmosphere to prepare positive electrode active material powder. An SEM image of the prepared positive electrode active material powder is illustrated in FIG. 2. According to FIG. 2, it may be confirmed that particles of the prepared positive electrode active material had a form of a pseudo-single particle.

### Comparative Example 2

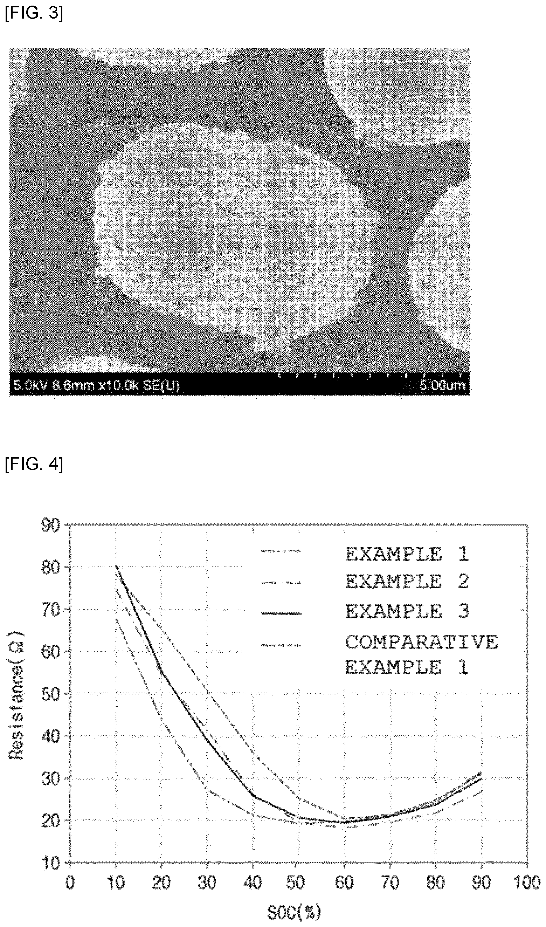

Positive electrode active material powder was prepared in the same manner as in Comparative Example 1 except that, after being maintained at 500°C for 10 hours, sintering was performed at 850°C for 10 hours instead of at 900°C for 30 hours. An SEM image of the prepared positive electrode active material powder is illustrated in FIG. 3. According to FIG. 3, it may be confirmed that particles of the prepared positive electrode active material were in the form of a secondary particle in which hundreds of primary particles were aggregated.

### Experimental Example 1

Average particle diameters of nodules/primary particles and average particle diameters D₅₀ of the positive electrode active material powders prepared by Examples 1 to 3 and Comparative Examples 1 and 2 were measured. The average particle diameters D₅₀ were measured using a Microtrac MT 3000, and the average particle diameters of the nodules/primary particles were measured through SEM image analysis.

### Measurement results are presented in Table 1 below.

**[Table 1]**

| | D₅₀ (µm) | Average particle diameter of nodules/primary particles (µm) |
|---|---|---|
| Example 1 | 0.8 | 0.8 |
| Example 2 | 1.2 | 0.9 |
| Example 3 | 1.8 | 1.4 |
| Comparative Example 1 | 3.4 | 1.7 |
| Comparative Example 2 | 3.4 | 0.05 |

### <Lithium Secondary Battery Preparation>

Each of the positive electrode active materials prepared in Examples 1 to 3 and Comparative Examples 1 and 2:carbon nanotubes:a PVDF binder were mixed in N-methylpyrrolidone in a weight ratio of 92.5:3:4.5 to prepare a positive electrode slurry. One surface of an aluminum current collector sheet was coated with the positive electrode slurry, dried at 120°C, and then rolled to prepare a positive electrode.

A negative electrode active material (mixture of graphite:SiO = 95:5 weight ratio):conductive agent (super C):a styrene-butadiene rubber (SBR):carboxymethyl cellulose (CMC) were mixed in water in a weight ratio of 95.8:1.0:2.2:1.0 to prepare a negative electrode slurry. One surface of a copper current collector sheet was coated with the negative electrode slurry, dried at 150°C, and then rolled to prepare a negative electrode.

After a lithium secondary battery was assembled by preparing an electrode assembly by disposing a separator between the above-prepared positive electrode and negative electrode, inserting the electrode assembly into a battery case, and then injecting an electrolyte solution, the lithium secondary battery was charged at a constant current of 0.1 C to 4.65 V at 45°C and then discharged at a constant current of 0.1 C to 2.0 V to perform an activation process.

### Experimental Example 2

The number of cycles until discharge capacity reached 80% and gas generation amounts of the lithium secondary batteries of Examples 1 to 3 and Comparative Example 2 prepared as described above were measured in the following manner. Measurement results are presented in [Table 2] below.
(1) Gas generation amount (unit: µL/Ah): After storing the lithium secondary battery at 60°C for 4 weeks, the gas generation amount was measured.
(2) The number of cycles reaching 80%: Charging of the lithium secondary battery at a constant current of 0.33 C to 4.35 V at 25°C and discharging of the lithium secondary battery at a constant current of 0.33 C to 2.5 V were set as one cycle, and, while charging and discharging were repeated, the number of times that discharge capacity after cycles relative to initial discharge capacity reached 80% was measured.

**[Table 2]**

| | Gas generation amount (µL/Ah) | The number of cycles reaching 80% |
|---|---|---|
| Example 1 | 1.8 | 558 |
| Example 2 | 1.5 | 581 |
| Example 3 | 1.1 | 600 |
| Comparative Example 2 | 3.8 | 450 |

According to [Table 2], it may be confirmed that the lithium secondary batteries of Examples 1 to 3, in which the overlithiated manganese-based oxide in the form of a single particle/pseudo-single particle was used, had less gas generation and better life characteristics than the lithium secondary battery of Comparative Example 2 in which the overlithiated manganese-based oxide in the form of a secondary particle was used.

### Experimental Example 3

Resistance according to state of charge (SOC) was measured by a hybrid pulse power characterization (HPPC) test while charging and discharging the lithium secondary batteries of Examples 1 to 3 and Comparative Example 1 prepared as described above. Specifically, the lithium secondary battery was charged at 0.1 C rate in a constant current-constant voltage (CCCV) mode to 4.65 V at room temperature (25°C), and then discharged at 0.33 C to 2.5 V. Then, resistance by 10-second voltage drop when the lithium secondary battery was discharged at 1.5 C rate was measured for each SOC while the lithium secondary battery was charged at 0.3 C rate in a CCCV mode to 4.65 V and then discharged.

Measurement results are illustrated in FIG. 4. As illustrated in FIG. 4, it may be confirmed that the lithium secondary batteries of Examples 1 to 3, in which the overlithiated manganese-based oxides having an average particle diameter of 2.5 µm or less were used, had lower resistance characteristics than the lithium secondary battery of Comparative Example 1 in which the overlithiated manganese-based oxide having an average particle diameter of 3.4 µm was used.

## Claims

1. Positive electrode active material powder comprising overlithiated manganese-based oxide particles represented by [Formula 1],
wherein the overlithiated manganese-based oxide particle is in a form of a single particle composed of one nodule or a pseudo-single particle that is a composite of 2 to 30 nodules, and
the positive electrode active material powder has an average particle diameter D₅₀ of 2.5 µm or less:
[Formula 1] LiₐNi_{b}Co_{c}Mn_{d}MₑO₂
wherein, in Formula 1, 1<a, 0≤b≤0.5, 0≤c≤0.1, 0.5≤d<1.0, and 0≤e≤0.2, and M is at least one selected from the group consisting of aluminum (Al), boron (B), cobalt (Co), tungsten (W), magnesium (Mg), vanadium (V), titanium (Ti), zinc (Zn), gallium (Ga), indium (In), ruthenium (Ru), niobium (Nb), tin (Sn), strontium (Sr), and zirconium (Zr).

2. The positive electrode active material powder of claim 1, wherein the positive electrode active material powder is composed of the overlithiated manganese-based oxide particles having at least one form of the single particle and the pseudo-single particle.

3. The positive electrode active material powder of claim 1, wherein the positive electrode active material powder has the average particle diameter D₅₀ of 0.5 µm to 2.5 µm.

4. The positive electrode active material powder of claim 1, wherein, in Formula 1, 1.1≤a≤1.5, 0.1≤b≤0.4, 0≤c≤0.05, 0.5≤d≤0.80, and 0≤e≤0.1.

5. The positive electrode active material powder of claim 1, wherein the overlithiated manganese-based oxide particle has a crystal structure in which a layered phase and a rock salt phase are mixed.

6. The positive electrode active material powder of claim 1, wherein the nodule has an average particle diameter of 0.5 µm to 3.5 µm.

7. The positive electrode active material powder of claim 1, wherein the overlithiated manganese-based oxide has a crystalline size of 30 nm to 200 nm.

8. A positive electrode comprising the positive electrode active material powder of any one of claims 1 to 7.

9. A lithium secondary battery comprising:
the positive electrode of claim 8;
a negative electrode including a negative electrode active material;
a separator disposed between the positive electrode and the negative electrode; and
an electrolyte.

10. The lithium secondary battery of claim 9, wherein the negative electrode comprises a silicon-based negative electrode active material.

11. The lithium secondary battery of claim 9, wherein the negative electrode comprises a mixture of a silicon-based negative electrode active material and a carbon-based negative electrode active material.

12. The lithium secondary battery of claim 9, wherein the negative electrode active material is formed of silicon (Si), and
the lithium secondary battery has an N/P ratio of 150% to 300%.

13. The lithium secondary battery of claim 9, wherein the negative electrode active material is a mixture of a silicon oxide and a carbon-based negative electrode active material, and
the lithium secondary battery has an N/P ratio of 100% to 150%.
